# EUROPEAN PATENT SPECIFICATION

(11) **EP 4 704 034 B1**
(45) Date of publication and mention of the grant of the patent: **26.08.2026**
(21) Application number: 25187482.2
(22) Date of filing: 04.07.2025
(51) Int. Cl.: G06T 7/73, G06T 7/77

(54) **SYSTEMS AND METHODS FOR PERFORMING UNCERTAINTY DETERMINATION IN A 2D-TO-3D IMAGE PREDICTION SYSTEM**
SYSTEME UND VERFAHREN ZUR DURCHFÜHRUNG VON UNSICHERHEITSBESTIMMUNG IN EINEM SYSTEM ZUR VORHERSAGE VON 2D-ZU-3D-BILDERN
SYSTÈMES ET PROCÉDÉS POUR EFFECTUER UNE DÉTERMINATION D'INCERTITUDE DANS UN SYSTÈME DE PRÉDICTION D'IMAGE 2D À 3D

(30) Priority: 29.08.2024 US 202418820111
(43) Date of publication of application: 04.03.2026
(73) Proprietor: The Boeing Company, Arlington, VA 22202 (US)
(72) Inventor: RATZLAFF, Neale, Arlington, 22202 (US); NGUYEN, Hieu, Arlington, 22202 (US); HUNG, Fan Hin, Arlington, 22202 (US); LATIB, Tameez, Arlington, 22202 (US); NGUYEN, Leon, Arlington, 22202 (US); KHOSLA, Deepak, Arlington, 22202 (US); NEIGHBOR, Joshua, Arlington, 22202 (US)
(74) Representative: St Clair Jones, Gregory Arthur Langley

(56) References cited:
- EP-A1- 4 024 346
- US-A1- 2020 074 678
- KIRA WURSTHORN ET AL: "Uncertainty Quantification with Deep Ensembles for 6D Object Pose Estimation", ARXIV.ORG, CORNELL UNIVERSITY LIBRARY, 201 OLIN LIBRARY CORNELL UNIVERSITY ITHACA, NY 14853, 12 March 2024 (2024-03-12), XP091698513
- SHI GUANYA ET AL: "Fast Uncertainty Quantification for Deep Object Pose Estimation", 2021 IEEE INTERNATIONAL CONFERENCE ON ROBOTICS AND AUTOMATION (ICRA), IEEE, 30 May 2021 (2021-05-30), pages 5200 - 5207, XP033989860, DOI: 10.1109/ICRA48506.2021.9561483
- XUSHENG LUO ET AL: "Certifying Robustness of Learning-Based Keypoint Detection and Pose Estimation Methods", ARXIV.ORG, CORNELL UNIVERSITY LIBRARY, 201 OLIN LIBRARY CORNELL UNIVERSITY ITHACA, NY 14853, 31 July 2024 (2024-07-31), XP091836711

## Description

### FIELD

This disclosure relates generally to aerial refueling, and more particularly to controlling an aerial refueling operation.

### BACKGROUND

In automated systems that use position (pose) estimation, potential errors may occur as a result of interference with acquisition of inputted images. The more accurate the analyses of inputted image data is, the more efficient and effective the automated system can perform.

The Institute of Photogrammetry and Remote Sensing (IPF), Karlsruhe Institute of Technology (KIT), XP91698513A by Kira Wursthorn et al is directed to "Uncertainty Quantification with Deep Ensembles for 6D Object Pose Estimation"

2021 IEEE International Conference on Robotics and Automation (ICRA), IEEE, XP033989860 by Shi Guanya et al is directed to "Fast Uncertainty Quantification for Deep Object Pose Estimation"

EP4024346A1 describes, in accordance with its abstract, fuel receptacle and boom tip position and pose estimation for aerial refueling. A video frame is received and within the video frame, aircraft keypoints for an aircraft to be refueled are determined. Based on at least the aircraft keypoints, a position and pose of a fuel receptacle on the aircraft is determined. Within the video frame, a boom tip keypoint for a boom tip of an aerial refueling boom is also determined. Based on at least the boom tip keypoint, a position and pose of the boom tip is determined. Based on at least the position and pose of the fuel receptacle and the position and pose of the boom tip, the aerial refueling boom is controlled to engage the fuel receptacle. Some examples overlay projections of an aircraft model on displayed video for a human observer.

XP091836711 by Xusheng Luo et al is directed to "Certifying Robustness of Learning-Based Keypoint Detection and Pose Estimation Methods"

US2020074678A1 describes, in accordance with its abstract, a method, a device and a non-transitory computer readable medium for tracking poses of multiple objects. The method includes detecting, by a processor, objects from each of a plurality of consecutive frames in a video sequence; estimating, by the processor, a pose of each of the objects within each of the plurality of consecutive frames; and tracking, by the processor, the poses of each of the objects across the plurality of consecutive frames.

### SUMMARY

In a first aspect, a method according to claim 1 is provided. In a second aspect, a system according to claim 11 is provided. In a third aspect, a tanker aircraft according to claim 15 is provided.

The subject matter of the present application has been developed in response to the present state of the art, and in particular, in response to the shortcomings of conventional aerial refueling techniques, that have not yet been fully solved by currently available techniques. Accordingly, the subject matter of the present application has been developed to provide systems and methods for providing aerial refueling techniques that overcome at least some of the above-discussed shortcomings of prior art techniques.

The following is a non-exhaustive list of examples, which may or may not be claimed, of the subject matter, disclosed herein.

In one example, a method includes receiving a two-dimensional (2D) image from a camera, predicting 2D keypoints of a target object within the 2D image based on a previously trained ensemble of neural networks, and estimating 6 degree-of-freedom (6DOF) position (pose) of the target object using the 2D keypoints using a perspective-n-point (PnP) optimization technique to create 6DOF pose parameters for each neural network in the ensemble. The method further includes combining the 6DOF pose parameters for each neural network in the ensemble into a single estimate of 6DOF pose parameters, determining an uncertainty score based on an uncertainty value derived from the ensembles and an uncertainty value derived from Monte Carlo sampling, and outputting the 6DOF pose parameters in response to the uncertainty score being within a predefined threshold.

The uncertainty score (i.e., uncertainty value or confidence value) takes into account two uncertainties. First, the uncertainty value derived from the ensembles, and second, the uncertainty value derived from Monte Carlo sampling. As discussed further herein, the uncertainty value derived from the ensembles considers the uncertainties introduced from the prediction of 2D keypoints from an image (e.g., stage 1). Whereas, the uncertainty value from Monte Carlo sampling considers the
uncertainty in solving the PnP problem to find the corresponding 6DOF pose (e.g., stage 2). The PnP is a specific solver that solves for 2D-3D correspondences given a set of keypoints. By taking into consideration uncertainties for both stages in the position/pose estimation process, a more accurate uncertainty score can be determined. This more accurate/reliable uncertainty signal can be used, as discussed herein, to improve safety and reliability of fuel refueling operations. For example, the uncertainty value can be supplied to an aerial refueling system for controlling output to receiver aircraft pilots, boom operators, and/or automated aerial refueling components during aerial refueling operations.

In another example, a system includes a camera configured to produce a two-dimensional (2D) image of a first device, a processor, and (optionally non-transitory) computer readable storage media storing code. The code is executable by the processor to perform operations including receiving the 2D image, predicting 2D keypoints of a target object within the 2D image based on a previously trained ensemble of neural networks, estimating 6 degree-of-freedom (6DOF) position (pose) of the target object using the 2D keypoints using a perspective-n-point (PnP) optimization technique to create 6DOF pose parameters for each neural network in the ensemble, combining the result into a single estimate of 6DOF pose parameters, determining an uncertainty score based on a first uncertainty value of the 6DOF pose parameters and a second uncertainty value of the 6DOF pose parameters, and outputting the 2D image in response to the uncertainty score being greater than a predefined threshold.

In still another example, a tanker aircraft includes a refueling boom, a camera configured to generate a two-dimensional (2D) image of the refueling boom, a processor, and (optionally non-transitory) computer readable storage media storing code. The code is executable by the processor to perform operations including receiving the 2D image, predicting 2D keypoints of a target object within the 2D image based on a previously trained ensemble of neural networks, estimating 6 degree-of-freedom (6DOF) position (pose) of the target object using the 2D keypoints using a perspective-n-point (PnP) optimization technique to create 6DOF pose parameters for each neural network in the ensemble, combining the result into a single estimate of 6DOF pose parameters, determining an uncertainty score based on an uncertainty value derived from the ensembles and an uncertainty value derived from Monte Carlo sampling, and outputting the 6DOF pose parameters in response to the uncertainty score being within a predefined threshold.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:
Figure 1 is a schematic block diagram of a tanker aircraft with an automated director light system, according to one or more examples of the present disclosure;
Figure 2 is a schematic, side view of an aircraft refueling operation, according to one or more examples of the present disclosure;
Figure 3 is a schematic, perspective view of an aircraft refueling operation, according to one or more examples of the present disclosure;
Figure 4 is a schematic view of an image of a portion of an aircraft, according to one or more examples of the present disclosure;
Figure 5 is a schematic flow diagram of a method of automatically controlling refueling operations, according to one or more examples of the present disclosure;
Figure 6 is a schematic flow diagram of a method of automatically controlling refueling operations, according to one or more examples of the present disclosure; and
Figure 7 is a schematic flow diagram of a method of performing uncertainty determination in a 2D-to-3D image prediction system, according to one or more examples of the present disclosure.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

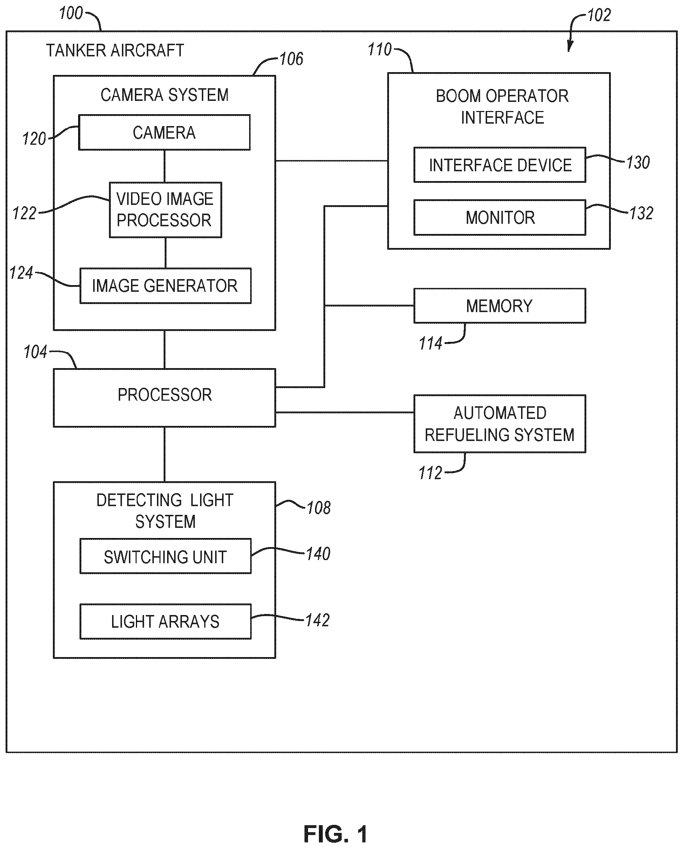

Disclosed herein is a refueling system 102 located on a tanker aircraft 100 that provides a determination of whether a two-dimensional (2D) to three-dimensional (3D) pose estimation system is correct. This determination can be supplied to an aircraft or aerial refueling system for controlling output to receiver aircraft pilots, boom operators, and/or automated aerial refueling components during aerial refueling operations. As shown in Figure 1, the refueling system 102 includes a processor 104, a camera system 106, a director light system 108 (e.g., directing light system), a boom operator interface 110, an automated refueling system 112, and memory 114.

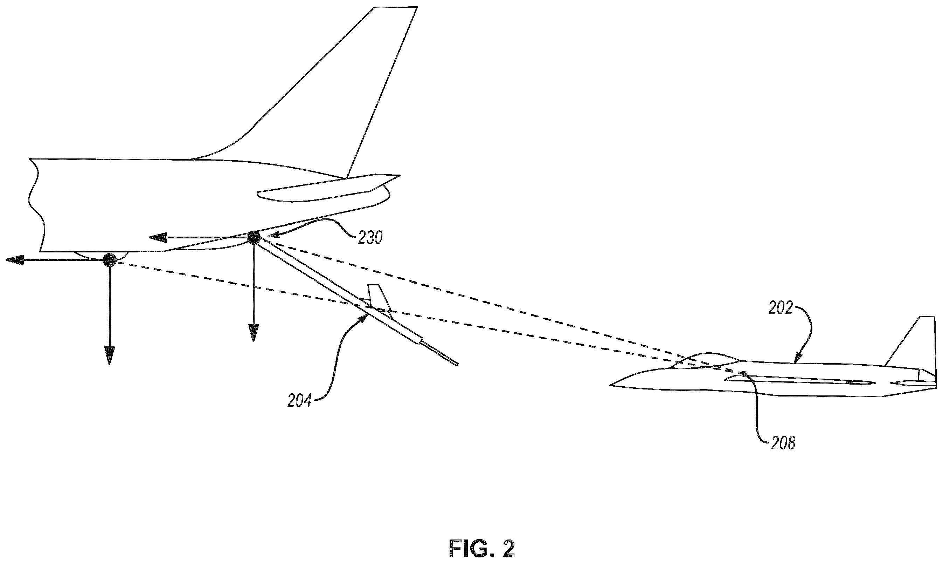

In various embodiments, referring to Figures 1 and 2, the camera system 106 includes a camera 120, a video image processor 122, and an image generator 124. The camera 120 is mounted approximately to a fixed platform within a fared housing attached to the lower aft fuselage of the tanker aircraft 100. The camera 120 includes a lens or lenses having remotely operated focus and zoom capability. The camera 120 is located in an aft position relative to and below the tanker aircraft 100. The video image processor 122 receives digitized video images from the camera 120 and generates real-time 2D video images. The digitized video images include the objects viewed by the camera 120 within a vision cone. The image generator 124 then generates images for presentation to a boom operator.

In various embodiments, the boom operator interface 110 includes a user interface device 130 and a monitor 132. Images presented on the monitor 132 are based on information provided by the processor 104. The director light system 108 includes a switching unit 140 and an array of lights 142 (i.e., pilot director lights). The switching unit 140 controls activation of the array of lights 142 based on information provided by the processor 104. The automated refueling system 112 controls operation of the refueling boom 204 and/or the tanker aircraft 100 based on information provided by the processor 104.

In various embodiments, the array of lights 142 is located on the lower forward fuselage of the tanker aircraft 100. The array of lights 142 is positioned to be clearly viewable by the pilot of the receiver aircraft 202. The array of lights 142 include various lights for providing directional information to the pilot of the receiver aircraft 202. The array of lights 142 may include an approach light bar, an elevation light bar, a fore/aft position light bar, four longitudinal reflectors, two lateral reflectors, or other lights.

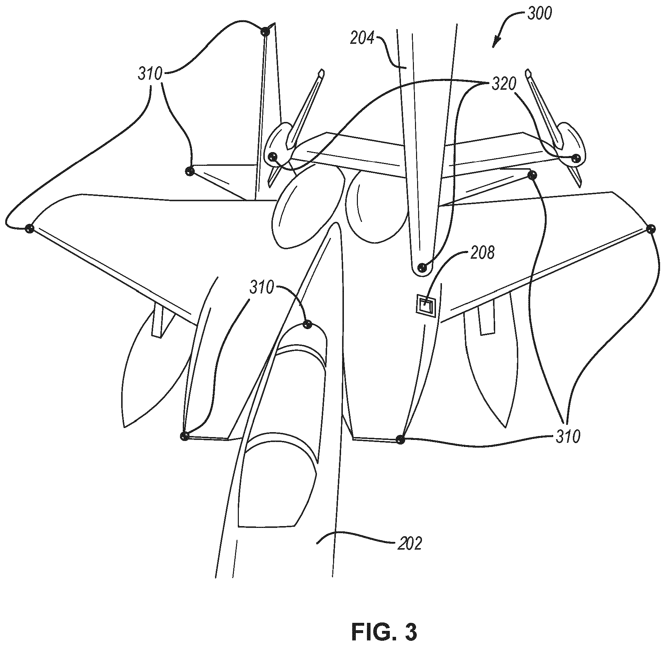

Referring to Figure 3, the camera system 106 produces a two-dimensional (2D) image 300 of a three-dimensional space including the refueling boom 204 and the receiver aircraft 202. The 2D image 300 includes an approach zone the receiver aircraft 202 enters into prior to beginning refueling operations. The receiver aircraft 202 includes a boom nozzle receiver 208 capable of coupling to the refueling boom 204 to accomplish fuel transfer.

It can be appreciated that refueling or close quarter operations may occur between other vehicles not just the aircraft 100, 202 depicted. The refueling or close quarter operations may occur during adverse weather conditions. The vehicles may be any vehicles that move relative to each other (in water, on land, in air, or in space). The vehicles may also be manned or unmanned. Given by way of non-limiting example, in various embodiments, the vehicles may be a motor vehicle driven by wheels and/or tracks, such as, without limitation, an automobile, a truck, a cargo van, and the like. Given by way of further non-limiting examples, in various embodiments, the vehicles may include a marine vessel such as, without limitation, a boat, a ship, a submarine, a submersible, an autonomous underwater vehicle (AUV), and the like. Given by way of further non-limiting examples, in various embodiments, the vehicles may include other manned or unmanned aircraft such as, without limitation, a fixed wing aircraft, a rotary wing aircraft, and a lighter-than-air (LTA) craft.

In various embodiments, (optionally non-transitory) computer readable instructions (i.e., code) stored in the memory 114 (i.e., storage media) cause the processor 104 to use raw image data from a single sensor (i.e., the camera 120) and make the raw data scalable and cost effective to integrate into existing systems. In particular, the processor 104 predicts keypoints 310 (see, e.g., Figure 3) of the receiver aircraft 202 within the 2D image 300. The keypoints 310 are referenced in 2D space. The prediction is based on a trained deep neural network configured to estimate the pixel location of the keypoints of the receiver aircraft 202 in the 2D image 300. The processor 104 then performs 2D-to-3D correspondence, using a 3D point matching algorithm, by projecting the 2D keypoints 310 into 3D space. Each of the predicted 2D keypoints 310 are projected from 2D space to 3D space using a perspective-n-point (PnP) pose computation to produce a prediction of the receiver aircraft 202 (i.e., an aircraft 6 degree-of-freedom (DOF) position (i.e., pose)). More generally the PnP pose computation produces any parameterization of an object to position it in 3D space. In the specific case of the boom 204, a set of more constrained parameters in the form of the boom control parameters (e.g., boom pitch and roll based on a boom attachment point 230) are produced.

In various embodiments, (optionally non-transitory) computer readable instructions (i.e., code) stored in the memory 114 (i.e., storage media) cause the processor 104 to predict keypoints 310 (see, e.g., Figure 3) of the receiver aircraft 202 or keypoints 320 (see, e.g., Figure 2) of the boom 204 within the 2D image 300. The keypoints 310, 320 are referenced in 2D space.

In various embodiments, the processor 104 trains a convolutional neural network (CNN) to identify features/keypoints on the 3D model (computer aided design (CAD) model) from a 2D image. The CNN is based on residual network (ResNet) architecture. The CNN removes final pooling and fully connected layers of the architecture and replaces them with a series of deconvolutional and/or upsampling layers to return an output image matching the height and width of the input image with the number of keypoints matching a number channels. Each of the channels is considered to be a heatmap of where the keypoint is located in 2D image space. From the heatmap, the pixel at the center of the distribution represented by the heatmap is chosen to be the position of the keypoint (i.e., the 2D keypoint predictions).

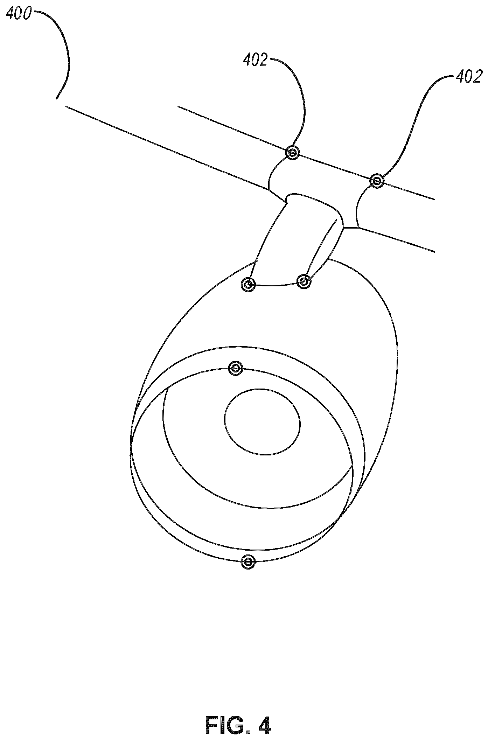

In various embodiments, referring to Figure 4, during training of the CNN, the detector (e.g., the CNN) takes as input an image 400, or in our case the rescaled bounding box crop of a video frame and returns as output a black and white heatmap image 402 for each keypoint. The heatmaps' pixel values indicate for each keypoint the likelihood of the 3D virtual object's keypoint being found at each pixel location of the image once the object has been projected onto the image. To train the weights of the CNN, ground truth heatmaps are constructed from ground truth 2D pixel locations. The pixel values of ground truth heatmaps are assigned the values of a Gaussian probability distribution over 2D coordinates with mean equal to the ground truth 2D pixel location and covariance left as a hyperparameter for training. The loss that is minimized during training is composed of the Jensen-Shannon divergence between the CNN's heatmap outputs and the ground truth heatmaps and the Euclidean norm between the CNN's 2D keypoint estimates and the ground truth 2D keypoints.

Each of the predicted 2D keypoints 310, 320 are compared with the corresponding 3D model keypoints using the PnP pose algorithm to produce a 6DOF pose estimate of the position of the receiver aircraft 202 or the refueling boom 204. Then, the processor 104 analyzes the 6DOF pose estimate for potential error. The processor 104 produces a confidence or uncertainty value associated with the 6DOF pose estimate. First, the processor 104 determines a reprojection error. The reprojection error includes a reprojection error for the i-th keypoint estimate. The reprojection error is calculated as the 2D distance between the i-th estimated 2D keypoint and the 2D projection of the i-th 3D model keypoint, using the solved 6DOF pose. $Reprojection Error for {i}^{th} keypoint = \hat{{k}_{i}} - P \left({k}_{i}, R, t\right)$
*N -* Number of keypoints
$\hat{{k}_{i}} , i ∈ \left[N\right]$ - i-th 2D keypoint estimate, N total points
*kᵢ, i* ∈ *N* - i-th 3D model estimate (corresponds to the i-th keypoint estimate), N total points
*P* - Projection operator based on camera parameters
R, t - Rotation and translation pose parameters (6DOF)
*M* - Number of new keypoint sets to sample
${{k}_{i}^{j}}^{˜}$*, i* ∈ [*N*]*, j* ∈ [*M*] - i-th 2D keypont in j-th new sampled keypoint set, N total points in each set, M total sets of points
*R^{j}, t^{j}, j* ∈ [*M*] - calculated pose parameters for j-th new sampled keypoint set, M total poses
*λ* - 1D tuning factor, used in sampling
${η}_{i}^{j} ∼ N \left(μ=\left[\begin{matrix}0 \\ 0\end{matrix}\right],Σ=\left[\begin{matrix}1 & 0 \\ 0 & 1\end{matrix}\right]\right) - 2 D$ Noise from a normal distribution with mean 0 and identity covariance matrix. *N*M* total samples, Template notation for noise from a normal distribution.
* - 1D multiplication or pointwise multiplication for vectors and matrices
$\hat{{Σ}_{i}} - 2 D$ covariance matrix for i-th keypoint estimate

The reprojection error is used to sample a distribution of new sets of keypoints and calculate poses for sampled keypoint sets to form a distribution of 6DOF pose results. The processor 104 samples M new sets of keypoints. To sample the i-th keypoint in the j-th new set of keypoints, the processor 104 samples noise from a 2D normal distribution with 0 mean and identity covariance. Next, the processor 104 multiplies (i.e., scales) the sampled noise by the absolute value of the reprojection error and a scaling factor which is used to tune the result. The processor 104 then adds the scaled noise to the 2D keypoint estimate. This can be interpreted as sampling from a 2D normal distribution centered on the 2D keypoint estimate, with covariance scaled by the reprojection error. $\hat{{k}_{i}^{i}} = \left({n}_{i}^{j}∗\frac{1}{λ}∗\left|\hat{{k}_{i}}-P\left({k}_{i}, R, t\right)\right|\right) + P \left({k}_{i}, R, t\right)$ ${{k}_{i}^{i}}^{˜} ∼ N \left(μ={\hat{k}}_{i}, Σ=\frac{1}{λ}∗{\hat{Σ}}_{i}∗\left‖{\hat{k}}_{i}-P\left({k}_{i}, R, t\right)\right‖\right)$

From the M sampled keypoint sets, the processor 104 obtains M new 6DOF pose estimates. The M 6DOF pose estimates form a distribution of solutions from which the processor 104 calculates a 6DOF standard deviation to represent solution uncertainty. If there is a large variance in statistically plausible 6DOF estimates, then the magnitude of uncertainty should increase accordingly.

In various embodiments, the processor 104 tracks the 6DOF pose of an object over the course of a video using a Kalman filter. The processor 104 updates the Kalman filter with the most recent pose and uses the Kalman filter's resulting mean pose to calculate reprojection error. An extra Kalman filter may be used to smooth uncertainty output.

In various embodiments, the processor 104 produces 3D position of a specific point of interest on the 3D object, after being rotated and translated by the predicted 6DOF pose. The processor 104 tailors uncertainty estimation to the 3D point output. After running the PnP algorithm to obtain a sample pose for each sample keypoint set, the processor 104 uses the sample pose to rotate and translate the 3D object model to calculate a sample 3D point. The result is a distribution over the 3D point of interest. From that distribution, the processor 104 computes a 3D standard deviation to represent solution uncertainty.

In various embodiments, the processor 104 uses *λ* = 3 and M = 128 sets of 2D keypoints. Other parameters may be used.

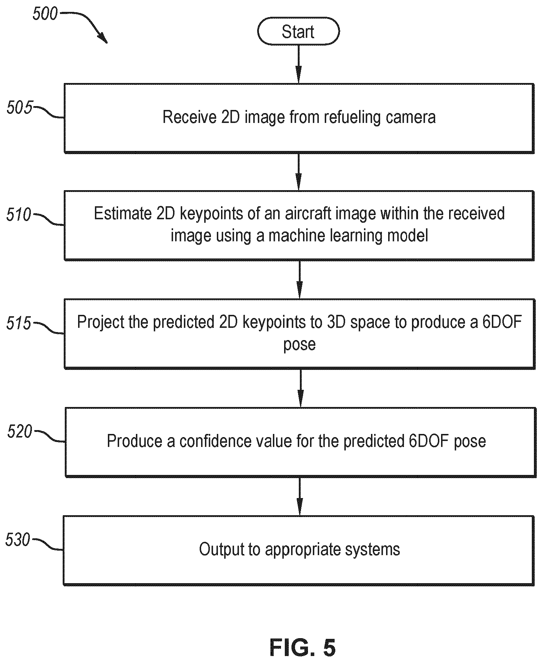

Referring to Figure 5, a method 500 includes outputting estimated position of a target object and a certainty value of the outputted estimated target object position. Block 505 of the method 500 includes receiving a 2D image from a refueling camera. Block 510 of the method 500 includes estimating keypoints of an aircraft image within the received 2D image. Block 515 of the method 500 includes comparing the predicted 2D keypoints with the corresponding 3D model keypoints via PnP to produce a 6DOF pose of the aircraft image. Block 520 of the method 500 includes producing a confidence value for the 6DOF pose of the aircraft image. Block 530 of the method 500 includes outputting the 6DOF pose of the aircraft image and the confidence value to appropriate aircraft or refueling systems.

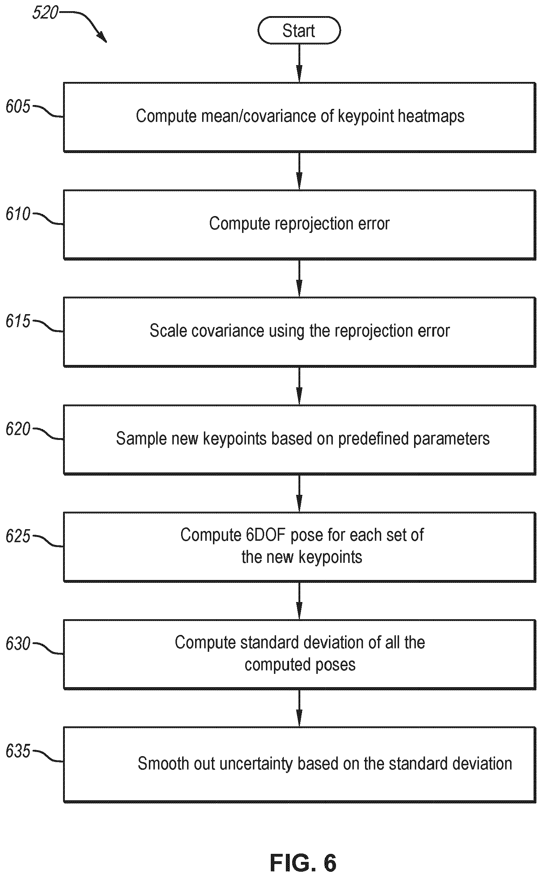

In some examples, block 520 of the method 500 further includes various sub-steps, as shown in Figure 6. Block 605 of block 520 includes computing mean/covariance of keypoint heatmaps. Furthermore, block 610 of block 520 includes computing reprojection error for each of the keypoints based on the PnP 6DOF solution. Block 615 of block 520 includes scaling covariance from block 605 using the reprojection error. Additionally, block 620 of block 520 includes sampling new keypoints based on predefined parameters. Block 625 of block 520 includes computing a 6DOF pose for each set of new keypoints. Block 630 of block 520 includes computing standard deviation of all the computed 6DOF poses. Finally, block 635 of block 520 includes smoothing out the resulting uncertainty, based on the standard deviation from block 630, across time with a temporal filter.

In various embodiments, an exemplary method characterizes a probability that a given prediction of a 2D-to-3D pose estimation system is incorrect. 2D-to-3D pose estimation pipelines which include at least the following two stages: stage 1: given a 2D image, output 2D keypoint estimates; and stage 2: given a set of 2D keypoint estimates, solve the PnP problem to find the corresponding 6DOF pose.

After keypoint and PnP neural networks described above are trained, embodiments are implemented in order to provide improved uncertainty analysis. In various embodiments, an ensemble is a set of K neural networks, independently trained with identical architecture. Each of the networks is a 2D keypoint detector. The K networks do not interact with or influence each other during training.

Each neural network of the ensemble has the following properties:
1. Identical network architecture and loss function;
2. Identical training time and training data;
3. Each model in the ensemble is initialized with random valued weights, drawn from identical distributions; and
4. Each model draws their weights via a different random seed.

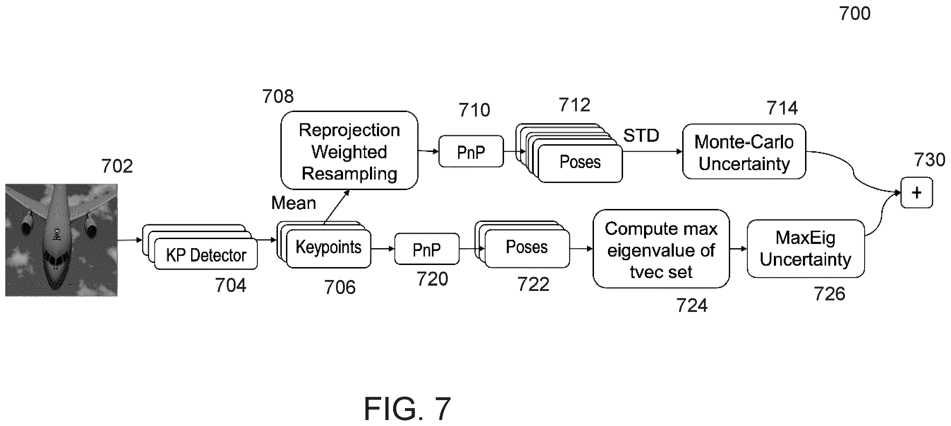

Referring to Figure 7, a vision pipeline 700 uses an ensemble of ***K*** keypoint detectors (block 704) from an inputted image 702 to extract ***K*** independent 2D keypoint estimates (block 706). The *i*^{th} pose ***pᵢ*** is computed by evaluating a single member of the ensemble on the input data ***x*** (2D image 702). A pose ***pᵢ*** is composed of two parts, a 3D rotation vector (Rvec) ***rᵢ**,* and a 3D translation vector (Tvec) ***tᵢ**.* Together they make up the 6D POS ***pᵢ** =* [***rᵢ**, **tᵢ***] ${p}_{i} = \left[{r}_{r}, {r}_{p}, {r}_{y}, {r}_{x}, {r}_{y}, {r}_{z}\right] = \left[{r}_{i}, {t}_{i}\right] = PnP \left({f}_{{θ}_{i}}\left(x\right)\right)$ $P = \left[{p}_{1},…,{p}_{K}\right] , \overline{P} = \frac{1}{K} {\sum }_{I = 1}^{K} {p}_{i}$

The pose is made up of rotation and translation vectors and is computed by running PnP (blocks 710, 720) on a predicted set of keypoints (block 706). The result gives a set of K poses (blocks 712, 722), and their mean, *P̅*, is used as the final predicted pose.

Given the set of poses and their mean, ***P**, P̅,* respectively, two measures of uncertainty are computed, such as identified below. The uncertainty results are then fused together at block 730 in a late fusion approach. Specifically:
1. Monte Carlo resampling computes the confidence region around the mean pose prediction (block 714); and
2. Maximum Eigen (MaxEig) computes the confidence region given the distribution of predicted plausible poses (block 724).

Both methods utilize the information given by the system described above, namely the predicted poses. But differ in the subset of information used to compute the uncertainty measure. First, it considers uncertainty regarding the mean pose prediction (*̅P̅*̅)̅,̅ then considers uncertainty regarding the individual predicted poses ***P***. This difference is important, as there may be information lost from the individual predictions, when taking the mean. The mean is used as a system output.

Mathematically, both methods utilize the same foundational idea. A confidence region around the prediction is calculated that can function as an uncertainty measure. This confidence region has a specific form, given using PnP to compute the 3D prediction from the 2D keypoints. PnP is a specific solver that solves for 2D-3D correspondences, given a set of keypoints. PnP itself is an instance of a more general class of solvers that use the least squares method to determine the solution to a system of equations. The least squares method is a well-known technique.

If uncertainties in the observations are available, then the observations are scaled by the uncertainty and the computation is rerun to get a least-squares fit. Doing this many times for scaled observations yields a set of solutions that will vary according to the uncertainty.

In various embodiments, a covariance matrix can be computed. The covariance matrix defines a region around the solution where the width of that region represents uncertainty about the solution. The covariance matrix can be computed analytically using available quantities. This computation may be unstable given that it involves inverting a matrix of partial derivatives, so the solutions given by the system predictions to approximate this covariance matrix are used. The shape of the region defined by that covariance matrix is a valid uncertainty measure.

A distribution of statistically plausible poses around a point are constructed (i.e., a mean pose prediction). An STD or spread of that distribution gives information about the degree of error expected from the original pose prediction. This "degree of error" is used as the uncertainty. Here, statistically plausible poses are constructed by adding noise to the predicted keypoints, then weighting the strength of that noise by each keypoint's reprojection error (block 708).

Some value is estimated that corresponds to confidence or uncertainty associated with a 6DOF estimate. One of the main components of the proposed uncertainty estimation method is the reprojection error. More formally, the reprojection error for the i-th keypoint estimate is calculated as the 2D distance between the i^{th} estimated 2D keypoint, and the 2D projection of the i^{th} 3D model keypoint, using the solved 6DOF pose.$Reprojection Error for the {i}^{th} Keypoint = {k}_{l} - \hat{P \left({k}_{l}\right. ,} \left.R, t\right)$

The exemplary method samples a distribution of new sets of keypoints using the reprojection error and calculates poses for sampled keypoint sets in order to form a distribution of 6DOF pose results. First, M new sets of keypoints are sampled. In order to sample the i^{th} keypoint in the j^{th} new set, noise is sampled from a 2D normal distribution with 0 mean and identity covariance. Next, the noise is multiplied by the absolute value of the reprojection error and a scaling factor which is used for tuning. Then, the scaled noise is added to the reprojected keypoint. This can be interpreted as sampling from a 2D normal distribution centered on the projected keypoint, with covariance scaled by the reprojection error. ${{k}^{˜}}_{i}^{j} = \left({n}_{i}^{j}∗\frac{1}{λ}∗\left|{\hat{k}}_{i}-P\left({k}_{i}, R, t\right)\right|\right) + P \left({k}_{i}, R, t\right)$

Then, from the M sampled keypoint sets, PnP is re-run to obtain M new 6DOF pose estimates. Next, the M 6DOF pose estimates form a distribution of solutions, from which a 6DOF standard deviation is calculated to represent solution uncertainty. If there is a large variance in statistically plausible 6DOF estimates, then the magnitude of the uncertainty should increase accordingly. The final uncertainty value for this approach is as follows: ${U}_{resampling} = {STD}_{M} \left(\left[PnP\left({{k}^{˜}}^{1}\right),…,PnP\left({{k}^{˜}}^{M}\right)\right]\right)$

In one embodiment, Monte Carlo resampling performs the first stage of the above identified process.

The second stage in quantifying uncertainty focuses on the distribution of poses resulting from each of the individual ensembles. The shape of an associated covariance, given by its eigenvalues, is used to determine an upper bound (MaxEig) of confidence in the prediction. Specifically, given a set of 6DOF poses ***P***, their translation vectors are extracted. The translation vector (Tvec) specifies the predicted XYZ location in 3D space. The set of Tvecs specified by the system via PnP gives a Kx3 matrix ***Tₖ***. An uncertainty value is computed using the 3x3 covariance of the solutions, derived from ***Tₖ***. The eigenvector with the largest eigenvalue of the covariance matrix specifies the direction in which the data varies the most, as follows: ${\hat{Σ}}_{{T}_{K}} = \left({T}_{K}-{\hat{T}}_{k}\right) {\left({T}_{K}-{\hat{T}}_{k}\right)}^{T}$ ${U}_{maxeig} = \sqrt{max \left(eig\left({\hat{Σ}}_{{T}_{K}}\right)\right)}$

The associated largest eigenvalue is used as the MaxEig uncertainty signal *U*_{maxeig} as it is directly related to an upper bound of the possible error associated with the predictions (block 726). The uncertainties are then combined (block 730). The output is a scalar value that represents uncertainty about the corresponding 6DOF prediction. This value incorporates information from all levels of the system:
(1) Uncertainty about the keypoint detector is made available by training and considering an ensemble of possible keypoint detectors;
(2) Uncertainty about the mean 2D-to-3D prediction is computed via the resampling approach, that models the errors propagated from the mean 2D prediction to the 3D pose; and
(3) Uncertainty about the errors introduced by the keypoint predictors are considered via the MaxEig approach, that uses the distribution of keypoint detector predictions to compute an uncertainty value.

The final output is produced by computing the 2-norm of the 6-dimensional standard resampling approach. The resampling uncertainty is a 6-dimensional vector, representing the uncertainty in each component of the 6DOF pose. In order to reduce that uncertainty to a single value, the 2-norm is computed, which yields a single scalar value. The single scalar value is added to the MaxEig uncertainty giving a final scalar value *U*. $U = {U}_{maxeig} + {Norm}_{2} \left.\left({U}_{resampling}\right)\right)$

Additionally, in an automated setting, where a pose estimate is used for robotic control, the uncertainty estimate is a quantity that can be used by an automated controller to make decisions, such as when to pause if pose estimates are less reliable.

The above-described methods could be applied to any dataset of 2D images-whether they are from cameras, simulation/digital recreation, or other. For example, the system could use a scanned drawing or painting.

The following is a non-exhaustive list of examples, which may or may not be claimed, of the subject matter, disclosed herein.

The following portion of this paragraph delineates example 1 of the subject matter, disclosed herein. According to example 1, a method includes receiving a two-dimensional (2D) image from a camera, predicting 2D keypoints of a target object within the 2D image based on a previously trained ensemble of neural networks, estimating 6 degree-of-freedom (6DOF) position (pose) of the target object using the 2D keypoints using a perspective-n-point (PnP) optimization technique to create 6DOF pose parameters for each neural network in the ensemble, and then combining the 6DOF pose parameters for each neural network in the ensemble into a single estimate of 6DOF pose parameters, determining an uncertainty score based on a first uncertainty value and a second uncertainty value, and outputting the 6DOF pose parameters in response to the uncertainty score being within a predefined threshold.

The following portion of this paragraph delineates example 2 of the subject matter, disclosed herein. According to example 2, which encompasses example 1, above, the method further comprises determining the first uncertainty value by perturbing one or more of the 2D keypoints to create one or more perturbed 2D keypoints, estimating 6DOF pose values of the target object based on the one or more perturbed 2D keypoints to create estimated perturbed 6DOF pose values, and sampling the estimated perturbed 6DOF pose values determining the 2D keypoints is further based on a trained neural network configured to output keypoint heat maps, wherein pixel intensity values associated with each of the keypoint heat maps indicates a keypoint detection probability.

The following portion of this paragraph delineates example 3 of the subject matter, disclosed herein. According to example 3, which encompasses example 2, above, wherein perturbing the one or more of the 2D keypoints comprises adding noise.

The following portion of this paragraph delineates example 4 of the subject matter, disclosed herein. According to example 4, which encompasses example 3, above, adding noise comprises adding Gaussian noise.

The following portion of this paragraph delineates example 5 of the subject matter, disclosed herein. According to example 5, which encompasses any of examples 1-4, above, the method further comprises determining the second uncertainty value by determining a primary component of covariance of the 6DOF pose parameters derived from the ensemble of neural networks.

The following portion of this paragraph delineates example 6 of the subject matter, disclosed herein. According to example 6, which encompasses example 5, above, wherein determining the primary component of the covariance of the 6DOF pose parameters comprises extracting translation vectors from the 6DOF pose parameters, producing a translation vector matrix based on the translation vectors, and computing the second uncertainty value based on the maximum eigenvalue of the covariance of the translation vector matrix.

The following portion of this paragraph delineates example 7 of the subject matter, disclosed herein. According to example 7, which encompasses any of examples 1-6, above, wherein determining the uncertainty score comprises reducing the first uncertainty value to a single scalar value and combining the single scalar value of the first uncertainty value with the second uncertainty value to produce the uncertainty score.

The following portion of this paragraph delineates example 8 of the subject matter, disclosed herein. According to example 8, a system comprises a camera configured to produce a two-dimensional (2D) image of a first device, a processor, and (optionally non-transitory) computer readable storage media storing code. The code being executable by the processor to perform operations comprising receiving the 2D image, predicting 2D keypoints of a target object within the 2D image based on a previously trained ensemble of neural networks, estimating 6 degree-of-freedom (6DOF) position (pose) of the target object using the 2D keypoints using a perspective-n-point (PnP) optimization technique to create 6DOF pose parameters for each neural network in the ensemble, combining the result into a single estimate of 6DOF pose parameters, determining an uncertainty score based on a first uncertainty value of the 6DOF pose parameters and a second uncertainty value of the 6DOF pose parameters, and outputting the 2D image in response to the uncertainty score being greater than a predefined threshold.

The following portion of this paragraph delineates example 9 of the subject matter, disclosed herein. According to example 9, which encompasses example 8, above, the processor is further configured to perturb one or more of the 2D keypoints to create one or more perturbed 2D keypoints, estimate 6DOF pose values of the target object based on the one or more perturbed 2D keypoints to create estimated perturbed 6DOF pose values, and sample the estimated perturbed 6DOF pose values.

The following portion of this paragraph delineates example 10 of the subject matter, disclosed herein. According to example 10, which encompasses example 9, above, the processor is further configured to perturb the one or more of the 2D keypoints by adding noise.

The following portion of this paragraph delineates example 11 of the subject matter, disclosed herein. According to example 11, which encompasses example 10, above, the noise comprises Gaussian noise.

The following portion of this paragraph delineates example 12 of the subject matter, disclosed herein. According to example 12, which encompasses any of examples 8-11, above, the processor is further configured to determine the second uncertainty value by determining a primary component of covariance of the 6DOF pose parameters derived from the ensemble of neural networks.

The following portion of this paragraph delineates example 13 of the subject matter, disclosed herein. According to example 13, which encompasses example 12, above, the code is executable by the processor is further configured to determine the upper bound by extracting translation vectors from the 6DOF pose parameters, producing a translation vector matrix based on the translation vectors, and computing the second uncertainty value based on the maximum eigenvalue of the covariance of the translation vector matrix.

The following portion of this paragraph delineates example 14 of the subject matter, disclosed herein. According to example 14, which encompasses any of examples 8-13, above, the processor is further configured to determine the primary component of the covariance of the 6DOF pose parameters by extracting translation vectors from the 6DOF pose parameters, producing a translation vector matrix based on the translation vectors, and computing the second uncertainty value based on the maximum eigenvalue of the covariance of the translation vector matrix.

The following portion of this paragraph delineates example 15 of the subject matter, disclosed herein. According to example 15, a tanker aircraft comprises a refueling boom, a camera configured to generate a two-dimensional (2D) image of the refueling boom, a processor, and (optionally non-transitory) computer readable storage media storing code. The code being executable by the processor to perform operations comprising receiving the 2D image, predicting 2D keypoints of a target object within the 2D image based on a previously trained ensemble of neural networks, estimating 6 degree-of-freedom (6DOF) position (pose) of the target object using the 2D keypoints using a perspective-n-point (PnP) optimization technique to create 6DOF pose parameters for each neural network in the ensemble, combining the result into a single estimate of 6DOF pose parameters, determining an uncertainty score based on a first uncertainty value and a second uncertainty value, and outputting the 6DOF pose parameters in response to the uncertainty score being within a predefined threshold.

The following portion of this paragraph delineates example 16 of the subject matter, disclosed herein. According to example 16, which encompasses example 15, above, the processor is further configured to determine the first uncertainty value by perturbing one or more of the 2D keypoints to create one or more perturbed 2D keypoints, estimating 6DOF pose values of the refueling aircraft based on the one or more perturbed 2D keypoints to create estimated perturbed 6DOF pose values and sampling the estimated perturbed 6DOF pose values.

The following portion of this paragraph delineates example 17 of the subject matter, disclosed herein. According to example 17, which encompasses example 16, above, the processor is further configured to perturb the one or more of the 2D keypoints by adding Gaussian noise.

The following portion of this paragraph delineates example 18 of the subject matter, disclosed herein. According to example 18, which encompasses any of examples 15-17, above, the processor is further configured to determine the second uncertainty value by determining a primary component of covariance of the 6DOF pose parameters derived from the ensemble of neural networks.

The following portion of this paragraph delineates example 19 of the subject matter, disclosed herein. According to example 19, which encompasses any of examples 15-18, above, the processor is further configured to determine the upper bound by extracting translation vectors from the 6DOF pose parameters, producing a translation vector matrix based on the translation vectors, and computing the second uncertainty value based on the maximum eigenvalue of the covariance of the translation vector matrix.

The following portion of this paragraph delineates example 20 of the subject matter, disclosed herein. According to example 20, which encompasses example 19, above, the processor is further configured to determine the uncertainty score by reducing the first uncertainty value to a single scalar value and combining the single scalar value of the first uncertainty value with the second uncertainty value to produce the uncertainty score.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

**In** the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Those skilled in the art will recognize that at least a portion of the controllers, devices, units, and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term controller/processor, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of controller (e.g., at a first time), as a second type of controller (e.g., at a second time, which may in some instances coincide with, overlap, or follow a first time), and/or as a third type of controller (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first controller that has a first purpose, then a second controller that has a second purpose and then, a third controller that has a third purpose, and so on. The transition of a reconfigurable and/or controllable component may occur in as little as a few nanoseconds, or may occur over a period of minutes, hours, or days.

In some such examples, at the time the controller is configured to carry out the second purpose, the controller may no longer be capable of carrying out that first purpose until it is reconfigured. A controller may switch between configurations as different components/modules in as little as a few nanoseconds. A controller may reconfigure on-the-fly, e.g., the reconfiguration of a controller from a first controller into a second controller may occur just as the second controller is needed. A controller may reconfigure in stages, e.g., portions of a first controller that are no longer needed may reconfigure into the second controller even before the first controller has finished its operation. Such reconfigurations may occur automatically, or may occur through prompting by an external source, whether that source is another component, an instruction, a signal, a condition, an external stimulus, or similar.

For example, a central processing unit/processor or the like of a controller may, at various times, operate as a component/module for displaying graphics on a screen, a component/module for writing data to a storage medium, a component/module for receiving user input, and a component/module for multiplying two large prime numbers, by configuring its logical gates in accordance with its instructions. Such reconfiguration may be invisible to the naked eye, and in some embodiments may include activation, deactivation, and/or re-routing of various portions of the component, e.g., switches, logic gates, inputs, and/or outputs. Thus, in the examples found in the foregoing/following disclosure, if an example includes or recites multiple components/modules, the example includes the possibility that the same hardware may implement more than one of the recited components/modules, either contemporaneously or at discrete times or timings. The implementation of multiple components/modules, whether using more components/modules, fewer components/modules, or the same number of components/modules as the number of components/modules, is merely an implementation choice and does not generally affect the operation of the components/modules themselves. Accordingly, it should be understood that any recitation of multiple discrete components/modules in this disclosure includes implementations of those components/modules as any number of underlying components/modules, including, but not limited to, a single component/module that reconfigures itself over time to carry out the functions of multiple components/modules, and/or multiple components/modules that similarly reconfigure, and/or special purpose reconfigurable components/modules.

In some instances, one or more components may be referred to herein as "configured to," "configured by," "configurable to," "operable/operative to," "adapted/adaptable," "able to," "conformable/conformed to," etc. Those skilled in the art will recognize that such terms (for example "configured to") generally encompass active-state components and/or inactive-state components and/or standby-state components, unless context requires otherwise.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software (e.g., a high-level computer program serving as a hardware specification), firmware, or virtually any combination thereof, limited to patentable subject matter under 35 U.S.C. 101. **In** an embodiment, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the embodiments disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, limited to patentable subject matter under 35 U.S.C. 101, and that designing the circuitry and/or writing the code for the software (e.g., a high-level computer program serving as a hardware specification) and or firmware would be well within the skill of one of skill in the art in light of this disclosure. In addition, those skilled in the art will appreciate that the mechanisms of the subject matter described herein are capable of being distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

With respect to the appended claims, those skilled in the art will appreciate that recited operations therein may generally be performed in any order. Also, although various operational flows are presented in a sequence(s), it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise. The described examples are to be considered in all respects only as illustrative and not restrictive.

## Claims

1. A computer-implemented method comprising
receiving a two-dimensional (2D) image from a camera;
predicting 2D keypoints of a target object within the 2D image based on a previously trained ensemble of neural networks;
estimating 6 degree-of-freedom (6DOF) position (pose) of the target object using the 2D keypoints using a perspective-n-point (PnP) optimization technique to create 6DOF pose parameters for each neural network in the ensemble;
combining the 6DOF pose parameters for each neural network in the ensemble into a single estimate of 6DOF pose parameters;
determining an uncertainty score based on an uncertainty value derived from the single estimate of 6DOF pose parameters and an uncertainty value derived from Monte Carlo sampling of the single estimate of 6DOF pose parameters; and
outputting the 6DOF pose parameters in response to the uncertainty score being within a predefined threshold.

2. The method of Claim 1, wherein outputting the 6DOF pose parameters comprises outputting the 6DOF pose parameters to an aircraft or refueling system.

3. The method of Claim 2, wherein the aircraft or refueling system is configured to control output to receiver aircraft pilots, boom operators, and/or automated aerial refueling components during aerial refueling operations.

4. The method of any of Claims 1 to 3, wherein outputting the 6DOF pose parameters comprises includes outputting the 2D image and/or the determined uncertainty score.

5. The method of any of Claims 1 to 4, further comprising determining the uncertainty value derived from the single estimate of 6DOF pose parameters by:
perturbing one or more of the 2D keypoints to create one or more perturbed 2D keypoints;
estimating 6DOF pose values of the target object based on the one or more perturbed 2D keypoints to create estimated perturbed 6DOF pose values; and
sampling the estimated perturbed 6DOF pose values.

6. The method of Claim 5, wherein perturbing the one or more of the 2D keypoints comprises adding noise.

7. The method of Claim 6, wherein adding noise comprises adding Gaussian noise.

8. The method of any of Claims 1 to 7, further comprising determining the uncertainty value derived from the single estimate of 6DOF pose parameters by determining a primary component of covariance of the 6DOF pose parameters derived from the ensemble of neural networks.

9. The method of Claim 8, wherein determining the primary component of the covariance of the 6DOF pose parameters comprises:
extracting translation vectors from the 6DOF pose parameters;
producing a translation vector matrix based on the translation vectors; and
computing the uncertainty value derived from the single estimate of 6DOF pose parameters based on the maximum eigenvalue of the covariance of the translation vector matrix.

10. The method of any of Claims 1 to 9, wherein determining the uncertainty score comprises:
reducing the uncertainty value derived from Monte Carlo sampling of the single estimate of 6DOF pose parameters to a single scalar value; and
combining the single scalar value of the uncertainty values to produce the uncertainty score.

11. A system comprising:
a camera configured to produce a two-dimensional (2D) image of a first device;
a processor; and
computer readable storage media storing code, the code being executable by the processor to perform the method of any of Claims 1 to 10.

12. The system of Claim 11, wherein the processor is further configured to:
perturb one or more of the 2D keypoints to create one or more perturbed 2D keypoints;
estimate 6DOF pose values of the target object based on the one or more perturbed 2D keypoints to create estimated perturbed 6DOF pose values; and
sample the estimated perturbed 6DOF pose values for the uncertainty value derived from Monte Carlo sampling of the single estimate of 6DOF pose parameters.

13. The system of Claim 12, wherein the processor is further configured to perturb the one or more of the 2D keypoints by adding noise.

14. The system of any of Claims 11 to 13, wherein the processor is further configured to determine the primary component of a covariance of the 6DOF pose parameters by:
extracting translation vectors from the 6DOF pose parameters;
producing a translation vector matrix based on the translation vectors; and
computing the uncertainty value derived from the single estimate of 6DOF pose parameters based on the maximum eigenvalue of the covariance of the translation vector matrix.

15. A tanker aircraft comprising:
a refueling boom;
a camera configured to generate a two-dimensional (2D) image of the refueling boom;
a processor; and
computer readable storage media storing code, the code being executable by the processor to perform the method of any of claims 1 to 10.

## Patentansprüche

1. Computerimplementiertes Verfahren, umfassend:
Empfangen eines zweidimensionalen (2D) Bildes von einer Kamera;
Vorhersagen von 2D-Schlüsselpunkten eines Zielobjekts innerhalb des 2D-Bildes basierend auf einem zuvor trainierten Ensemble von neuronalen Netzwerken;
Schätzen einer Position mit 6 Freiheitsgraden (6DOF-Pose) des Zielobjekts unter Verwendung der 2D-Schlüsselpunkte, indem eine "Perspektive-n-Punkt"-Optimierungstechnik (PnP-Optimierungstechnik) verwendet wird, um Parameter einer 6DOF-Pose für jedes neuronale Netzwerk in dem Ensemble zu erstellen;
Kombinieren der 6DOF-Posenparameter für jedes neuronale Netzwerk in dem Ensemble zu einer einzigen Schätzung von 6DOF-Posenparametern;
Ermitteln eines Unsicherheitsmaßes basierend auf einem Unsicherheitswert, der aus der einzigen Schätzung von 6DOF-Posenparametern abgeleitet wird, und einem Unsicherheitswert, der aus einer Monte-Carlo-Abtastung der einzigen Schätzung von 6DOF-Posenparametern abgeleitet wird; und
Ausgeben der 6DOF-Posenparameter als Reaktion darauf, dass das Unsicherheitsmaß innerhalb eines vordefinierten Schwellenwerts liegt.

2. Verfahren nach Anspruch 1, wobei das Ausgeben der 6DOF-Posenparameter ein Ausgeben der 6DOF-Posenparameter an ein Flugzeug oder ein Betankungssystem umfasst.

3. Verfahren nach Anspruch 2, wobei das Luftfahrzeug oder das Betankungssystem konfiguriert ist, um während der Luftbetankungsoperationen eine Ausgabe an Empfängerluftfahrzeugpiloten, Operatoren für die Luftbetankung und/oder automatisierte Luftbetankungskomponenten zu steuern.

4. Verfahren nach einem der Ansprüche 1 bis 3, wobei das Ausgeben der 6DOF-Posenparameter ein Ausgeben des 2D-Bildes und/oder des ermittelten Unsicherheitsmaßes umfasst.

5. Verfahren nach einem der Ansprüche 1 bis 4, das ferner ein Ermitteln des Unsicherheitswerts umfasst, der aus der einzelnen Schätzung von 6DOF-Posenparametern abgeleitet wird, durch ein:
Stören eines oder mehrerer der 2D-Schlüsselpunkte, um einen oder mehrere gestörte 2D-Schlüsselpunkte zu erstellen;
Schätzen von 6DOF-Posenwerten des Zielobjekts basierend auf dem einen oder den mehreren gestörten 2D-Schlüsselpunkten, um geschätzte gestörte 6DOF-Posenwerte zu erstellen; und
Abtasten der geschätzten gestörten 6DOF-Posenwerte.

6. Verfahren nach Anspruch 5, wobei das Stören des einen oder der mehreren der 2D-Schlüsselpunkte ein Hinzufügen eines Rauschens umfasst.

7. Verfahren nach Anspruch 6, wobei das Hinzufügen eines Rauschens ein Hinzufügen eines Gaußschen Rauschens umfasst.

8. Verfahren nach einem der Ansprüche 1 bis 7, das ferner ein Ermitteln des Unsicherheitswerts umfasst, der aus der einzigen Schätzung von 6DOF-Posenparametern abgeleitet wird, indem eine Primärkomponente einer Kovarianz der 6DOF-Posenparameter ermittelt wird, die von dem Ensemble von neuronalen Netzwerken abgeleitet werden.

9. Verfahren nach Anspruch 8, wobei das Ermitteln der Primärkomponente der Kovarianz der 6DOF-Posenparameter umfasst:
Extrahieren von Translationsvektoren aus den 6DOF-Posenparametern;
Erzeugen einer Translationsvektormatrix basierend auf den Translationsvektoren; und
Berechnen des Unsicherheitswerts, der, basierend auf dem maximalen Eigenwert der Kovarianz der Translationsvektormatrix, aus der einzigen Schätzung von 6DOF-Posenparametern abgeleitet wird.

10. Verfahren nach einem der Ansprüche 1 bis 9, wobei das Ermitteln des Unsicherheitsmaßes umfasst:
Reduzieren des Unsicherheitswerts, der aus der Monte-Carlo-Abtastung der einzigen Schätzung von 6DOF-Posenparametern abgeleitet wird, auf einen einzigen Skalarwert; und
Kombinieren des einzigen Skalarwerts der Unsicherheitswerte, um das Unsicherheitsmaß zu erzeugen.

11. System, umfassend:
eine Kamera, die konfiguriert ist, um ein zweidimensionales (2D) Bild einer ersten Vorrichtung zu erzeugen;
einen Prozessor; und
ein computerlesbares Speichermedium, in dem ein Code gespeichert ist, wobei der Code durch den Prozessor ausführbar ist, um das Verfahren nach einem der Ansprüche 1 bis 10 durchzuführen.

12. System nach Anspruch 11, wobei der Prozessor ferner konfiguriert ist zum: Stören eines oder mehrerer der 2D-Schlüsselpunkte, um einen oder mehrere gestörte 2D-Schlüsselpunkte zu erstellen;
Schätzen von 6DOF-Posenwerten des Zielobjekts basierend auf dem einen oder den mehreren gestörten 2D-Schlüsselpunkten, um geschätzte gestörte 6DOF-Posenwerte zu erstellen; und
Abtasten der geschätzten gestörten 6DOF-Posenwerte für den Unsicherheitswert, der aus der Monte-Carlo-Abtastung der einzigen Schätzung von 6DOF-Posenparametern abgeleitet wird.

13. System nach Anspruch 12, wobei der Prozessor ferner konfiguriert ist zum Stören des einen oder der mehreren 2D-Schlüsselpunkte, indem ein Rauschen hinzugefügt wird.

14. System nach einem der Ansprüche 11 bis 13, wobei der Prozessor ferner konfiguriert ist zum Ermitteln der Primärkomponente einer Kovarianz der 6DOF-Posenparameter durch ein:
Extrahieren von Translationsvektoren aus den 6DOF-Posenparametern;
Erzeugen einer Translationsvektormatrix basierend auf den Translationsvektoren; und
Berechnen des Unsicherheitswerts, der, basierend auf dem maximalen Eigenwert der Kovarianz der Translationsvektormatrix, aus der einzigen Schätzung von 6DOF-Posenparametern abgeleitet wird.

15. Tankflugzeug, umfassend:
einen Betankungsausleger;
eine Kamera, die konfiguriert ist, um ein zweidimensionales (2D) Bild des Betankungsauslegers zu erzeugen;
einen Prozessor; und
ein computerlesbares Speichermedium, in dem ein Code gespeichert ist, wobei der Code durch den Prozessor ausführbar ist, um das Verfahren nach einem der Ansprüche 1 bis 10 durchzuführen.

## Revendications

1. Procédé mis en œuvre par ordinateur, comprenant :
la réception d'une image bidimensionnelle (2D) en provenance d'une caméra ;
la prédiction de points clés 2D d'un objet cible au sein de l'image 2D sur la base d'un ensemble de réseaux de neurones précédemment entraîné ;
l'estimation d'une position (pose) à 6 degrés de liberté (6DOF) de l'objet cible au moyen des points clés 2D par une technique d'optimisation Perspective-n-Point (PnP) pour créer des paramètres de pose 6DOF pour chaque réseau de neurones de l'ensemble ;
la combinaison des paramètres de pose 6DOF pour chaque réseau de neurones de l'ensemble en une seule estimation de paramètres de pose 6DOF ;
la détermination d'un score d'incertitude basé sur une valeur d'incertitude dérivée de l'estimation unique des paramètres de pose 6DOF et sur une valeur d'incertitude dérivée d'un échantillonnage de Monte Carlo de l'estimation unique des paramètres de pose 6DOF ; et
la sortie de paramètres de pose 6DOF en réponse au fait que le score d'incertitude se situe en-deçà d'un seuil prédéfini.

2. Procédé selon la revendication 1, dans lequel la sortie des paramètres de pose 6DOF comprend la sortie des paramètres de pose 6DOF à destination d'un aéronef ou d'un système de ravitaillement en carburant.

3. Procédé selon la revendication 2, dans lequel l'aéronef ou le système de ravitaillement en carburant est configuré pour commander la sortie à destination de pilotes d'aéronef récepteurs, d'opérateurs de perche, et/ou de composants de ravitaillement en vol automatisés pendant des opérations de ravitaillement en vol.

4. Procédé selon l'une quelconque des revendications 1 à 3, dans lequel la sortie des paramètres de pose 6DOF comprend la sortie de l'image 2D et/ou du score d'incertitude déterminé.

5. Procédé selon l'une quelconque des revendications 1 à 4, comprenant en outre la détermination de la valeur d'incertitude dérivée de l'estimation unique de paramètres de pose 6DOF par :
la perturbation d'un ou de plusieurs des points clés 2D pour créer un ou plusieurs points clés 2D perturbés ;
l'estimation de valeurs de pose 6DOF de l'objet cible sur la base du ou des points clés 2D perturbés pour créer des valeurs de pose 6DOF perturbées estimées ; et
l'échantillonnage des valeurs de pose 6DOF perturbées estimées.

6. Procédé selon la revendication 5, dans lequel la perturbation du ou des points clés 2D comprend l'ajout de bruit.

7. Procédé selon la revendication 6, dans lequel l'ajout de bruit comprend l'ajout de bruit gaussien.

8. Procédé selon l'une quelconque des revendications 1 à 7, comprenant en outre la détermination de la valeur d'incertitude dérivée de l'estimation unique de paramètres de pose 6DOF par la détermination d'une composante principale de covariance des paramètres de pose 6DOF dérivée de l'ensemble de réseaux de neurones.

9. Procédé selon la revendication 8, dans lequel la détermination de la composante principale de la covariance des paramètres de pose 6DOF comprend :
l'extraction de vecteurs de translation à partir des paramètres de pose 6DOF ;
la production d'une matrice de vecteurs de translation basée sur les vecteurs de translation ; et
le calcul de la valeur d'incertitude dérivée de l'estimation unique des paramètres de pose 6DOF sur la base de la valeur propre maximale de la covariance de la matrice de vecteurs de translation.

10. Procédé selon l'une quelconques des revendications 1 à 9, dans lequel la détermination du score d'incertitude comprend :
la réduction de la valeur d'incertitude dérivée de l'échantillonnage de Monte Carlo de l'estimation unique des paramètres de pose 6DOF à une valeur scalaire unique ; et
la combinaison de la valeur scalaire unique des valeurs d'incertitude pour produire le score d'incertitude.

11. Système comprenant :
une caméra configurée pour produire une image bidimensionnelle (2D) d'un premier dispositif ;
un processeur ; et
un support de stockage lisible par ordinateur stockant un code, le code pouvant être exécuté par le processeur pour mettre en œuvre le procédé selon l'une quelconque des revendications 1 à 10.

12. Système selon la revendication 11, dans lequel le processeur est en outre configuré pour : perturber un ou plusieurs des points clés 2D pour créer un ou plusieurs points clés 2D perturbés ;
estimer des valeurs de pose 6DOF de l'objet cible sur la base du ou des points clés 2D perturbés pour créer des valeurs de pose 6DOF perturbées estimées ; et
échantillonner les valeurs de pose 6DOF perturbées estimées pour la valeur d'incertitude dérivée de l'échantillonnage de Monte Carlo de l'estimation unique des paramètres de pose 6DOF.

13. Système selon la revendication 12, dans lequel le processeur est en outre configuré pour perturber le ou les points clés 2D par ajout de bruit.

14. Système selon l'une quelconque des revendications 11 à 13, dans lequel le processeur est en outre configuré pour déterminer la composante principale d'une covariance des paramètres de pose 6DOF par :
l'extraction de vecteurs de translation à partir des paramètres de pose 6DOF ;
la production d'une matrice de vecteurs de translation basée sur les vecteurs de translation ; et
le calcul de la valeur d'incertitude dérivée de l'estimation unique des paramètres de pose 6DOF sur la base de la valeur propre maximale de la covariance de la matrice de vecteurs de translation.

15. Aéronef ravitailleur comprenant :
une perche de ravitaillement;
une caméra configurée pour générer une image bidimensionnelle (2D) de la perche de ravitaillement ;
un processeur ; et
un support de stockage lisible par ordinateur stockant un code, le code étant exécutable par le processeur pour mettre en œuvre le procédé selon l'une quelconque des revendications 1 à 10.
